# EUROPÄISCHE PATENTSCHRIFT

(11) **EP 2 446 401 B1**
(45) Veröffentlichungstag und Bekanntmachung des Hinweises auf die Patenterteilung: **13.11.2013**
(21) Anmeldenummer: 10728597.5
(22) Anmeldetag: 22.06.2010
(51) Int. Cl.: G06K 19/077

(54) **VERFAHREN UND VORRICHTUNG ZUM HERSTELLEN EINES HALBZEUGS ODER EINES DAS HALBZEUG UMFASSENDEN SICHERHEITSDOKUMENTS**
METHOD AND DEVICE FOR PRODUCING AN INLAY OR SECURITY DOCUMENT WITH ASSOCIATED INLAY
METHODE ET APPAREIL POUR LA FABRICATION D'UNE FEUILLE D'INSERTION OU DOCUMENT DE SECURITE INCORPORANT UNE FEUILLE D'INSERTION

(30) Priorität: 26.06.2009 DE 102009030818
(43) Veröffentlichungstag der Anmeldung: 02.05.2012
(73) Patentinhaber: Bundesdruckerei GmbH, 10969 Berlin (DE)
(72) Erfinder: STIEMERT, Peter, 10787 Berlin (DE); MÄRTENS, Detlef, 13599 Berlin (DE)
(74) Vertreter: Obst, Bernhard
(86) Internationale Anmeldenummer: PCT/EP2010/003785
(87) Internationale Veröffentlichungsnummer: WO 2010/149358

(56) Entgegenhaltungen:
- WO-A2-03/092045
- US-A1- 2003 052 177

## Beschreibung

Die Erfindung betrifft ein Verfahren und eine Vorrichtung zum Herstellen eines Halbzeugs, welches ein Substrat, eine Antennen- oder Leitungsstruktur mit einer Kontaktfläche (im Folgenden als Antennenkontaktbereich bezeichnet) sowie eine Schaltungsstruktur, beispielsweise ein Chipmodul, mit einer Schaltungsstrukturkontaktfläche (welche im Folgenden als Chipkontaktfläche oder Chipkontaktbereich bezeichnet wird) umfasst. Bei dem fertigen Halbzeug sind die Leitungs- oder Antennenstruktur und die Schaltungsstruktur (Chipmodul) auf dem Substrat angeordnet und in einem Überlappungsbereich des Antennenkontaktbereichs und des Chipkontaktbereichs ist zwischen diesen ein elektrischer Kontakt ausgebildet. Die Erfindung betrifft ferner eine Vorrichtung zum Herstellen eines Halbzeugs. Solche Halbzeuge werden anschließend verwendet, um sie als so genannte Inlays in Wert- und/oder Sicherheitsdokumenten zu verwenden. Hierbei wird das Substrat in der Regel zwischen weitere Substratschichten, die vorzugsweise aus thermoplastischen Materialien bestehen, geschichtet. Anschließend wird in einem Laminationsvorgang ein Laminationskörper hergestellt, so dass die Leitungs- und/oder Antennenstruktur und die hiermit kontaktierte Schaltungsstruktur (das Chipmodul) im Innern des hergestellten Laminationskörpers eingeschlossen sind. Sie sind so vor Manipulationen geschützt.

Eine Antennenstruktur ist beispielsweise als einfache Spule mit einer Windung oder als Leiterschleifen ausgebildet. Über elektromagnetische Felder ist es somit möglich, aufgrund der Induktion elektrische Spannungen und Ströme in der Antennenstruktur zu erzeugen und so die elektrische Schaltungsstruktur mit elektrischer Energie zu versorgen und/oder Signale einzukoppeln und/oder auszulesen.

Halbzeuge dieser Art und Sicherheitsdokumente, die solche Halbzeuge als Inlays umfassen, sind dem Fachmann bekannt. Beispielsweise gibt es Reisepässe oder andere Identifikationsdokumente, die beispielsweise in den Formaten ID-1, ID-2 und/oder ID-3 hergestellt sind und mit einem so genannten RFID (Radio Frequency Identification Device) gemäß der ICAO 9303 Norm ausgebildet sind (ICAO = International Civil Aviation Organization). Solche Dokumente werden auch als Smartcards bezeichnet.

Ein Verfahren zur Herstellung solcher Smartcards ist beispielsweise in der US 2009/0000107 A1 beschrieben. Zum Ausbilden der Verbindung zwischen der Antennenstruktur und der Schaltungsstruktur sind verschiedene Verfahren und Techniken bekannt. Diese umfassen beispielsweise ein Verkleben mit leitfähigem Kleber sowie unterschiedliche thermische Verbindungsverfahren wie Ultraschallschweißen, Löten, Laserlöten, Laserschweißen, aber auch andere Verfahren wie Crimpen.

Aus der WO 03/092045 A2 ist ein Verfahren zum Herstellen eines elektrischen Schaltkreises bekannt. Dieser wird gebildet, indem eine leitfähige Schicht auf einem Substrat gebildet und strukturiert wird, mindestens eine weitere leitfähige Schicht auf einem anderen Substrat gebildet und strukturiert wird, die elektrische Schicht auf mindestens einem Abschnitt der einen leitfähigen Schicht abgeschieden wird, ein integrierter Schaltkreis zwischen den Substraten angeordnet wird, der integrierte Schaltkreis mit der leitfähigen Schicht gekoppelt wird und die Substrate aneinander so befestigt werden, dass die leitfähigen Schichten zwischen den Substraten angeordnet sind.

Aus der US 2003/0052177 A1 ist eine sogenannte Smartcard bekannt, die eine Antenne auf einer papierartigen aus Fasermaterial hergestellten Unterstützung, zwei Kartenkörperteile, welche mindestens eine Schicht aus einem Plastikmaterial mit einer niedrigen Fließtemperatur aufweisen, je einen Kartenkörperteil auf jeder Seite der Unterstützung und ein elektronisches Modul mit einem Chip umfasst, der mit der Antenne verbunden ist, wobei die Anordnung aus der Antennenunterstützung und den zwei Kartenkörpern hergestellt ist, indem diese mittels eines Heißlaminationsverfahrens unter Druck zusammengefügt werden. Die aus einem faserartigen Material hergestellte Unterstützung umfasst mindestens eine Öffnung, so dass die Kunststoffschichten der Kartenkörperteile während des Laminationsvorgangs in nahezu perfekten Kontakt gelangen, wodurch durch die Öffnung eine Schweißverbindung zwischen den Kartenkörperteilen ausbildet und hierdurch die Verbindung mit dem Modul unterstützt wird.

Aus der DE 10 2006 020 778 A1 ist ein so genanntes Zustellsystem für eine Bearbeitungsvorrichtung bekannt, die beispielsweise eine Verlegevorrichtung und eine Kontaktvorrichtung für Transpondereinheiten ist. Ein Führungsschlitten ist über einen Antrieb verfahrbar und über einen Belastungsaufnehmer, insbesondere einen Kraftaufnehmer, mit einer Verbindungseinheit verbunden, an der die Bearbeitungsvorrichtung befestigt ist. Über das Zustellsystem kann beispielsweise eine Sonotrode geführt werden, die verwendet wird, um Antennendrähte mit dem Chip zu kontaktieren bzw. die Antennendrähte in ein Substrat der Transpondereinheit einzubetten.

In solchen Transpondereinheiten, die eine Antennenstruktur und eine Schaltungsstruktur (Chipmodul) umfassen, werden in der Regel sensible Informationen gespeichert, die beispielsweise einen Besitzer eines Sicherheitsdokuments identifizieren, in das die Transpondereinheit integriert ist. Daher ist es von großem Interesse, eine Manipulation an der Transpondereinheit zu verhindern. Daher ist es zum einen üblich, die Transpondereinheit als Inlay auszugestalten, welches vollständig in einen Dokumentkörper integriert, beispielsweise einlaminiert, ist. Um jedoch ein Verfälschen der in der Schaltungsstruktur gespeicherten Informationen und/oder ein Verändern der Schaltungsstruktur oder gar ein Austauschen der Schaltungsstruktur, insbesondere nach einer Delamination zu vermeiden, ist es darüber hinaus erforderlich, sicherzustellen, dass die Schaltungsstruktur und die Antennenstruktur möglichst nicht mehr voneinander getrennt oder von dem Substrat des Halbzeugs abgelöst werden können, ohne zumindest erkennbare Spuren zu hinterlassen. Darüber hinaus ist es selbstverständlich auch von großem Interesse, das Halbzeug möglich kostengünstig herzustellen und so auszubilden, dass es für den Integrationsprozess möglichst günstige Eigenschaften aufweist.

Der Erfindung liegt somit die Aufgabe zugrunde, ein verbessertes Halbzeug, ein verbessertes Verfahren zum Herstellen eines Halbzeugs, ein Verfahren zur Herstellung eines Sicherheitsdokuments sowie eine Vorrichtung zum Herstellen eines Halbzeugs oder eines Sicherheitsdokuments mit einer Antennen- oder Leiterstruktur und einer hiermit kontaktierten Schaltungsstruktur zu schaffen.

Zur Lösung dieser Aufgabe wird ein Verfahren zum Herstellen eines Halbzeugs vorgeschlagen, welches folgende Schritte umfasst: Bereitstellen eines Substrats, Bereitstellen einer Schaltungsstruktur mit mindestens einem Chipkontaktbereich, Aufbringen einer Antennenstruktur, die mindestens einen Antennenkontaktbereich umfasst, und der Schaltungsstruktur auf das Substrat, so dass der mindestens eine Antennenkontaktbereich und der mindestens eine Chipkontaktbereich zueinander benachbart sind und sich zumindest teilweise flächig in einem Überlappungsbereich überlappen, und Herstellen eines elektrischen Kontakts zwischen dem mindestens einen Antennenkontaktbereich und dem mindestens einen Chipkontaktbereich in dem Überlappungsbereich. Das Verfahren zum Herstellen des Halbzeugs ist ein Bestandteil eines Verfahrens zum Herstellen eines Sicherheitsdokuments, sofern das Halbzeug in ein Sicherheitsdokument integriert wird. Somit ist ein Verfahren zum Herstellen eines Halbzeugs oder eines das Halbzeug umfassenden Sicherheitsdokuments vorgeschlagen.

Es ist erfindungsgemäß vorgesehen, dass mindestens eine Durchgangsöffnung in dem Überlappungsbereich ausgebildet wird, die den mindestens einen Antennenkontaktbereich und den mindestens einen Chipkontaktbereich durchdringt. Diese mindestens eine Durchgangsöffnung bietet die Möglichkeit, dass durch diese hindurch in einem nachfolgenden Integrationsschritt des Halbzeugs in einen Dokumentenkörper durch diese Durchgangsöffnung hindurch eine formschlüssige Verbindung ausbildbar ist. Hierdurch wird ein späteres Trennen der Schaltungsstruktur von der Antennenstruktur deutlich erschwert. Ferner wird die Alltagstauglichkeit eines Sicherheitsdokuments mit einem solchen Halbzeug verbessert, da eine Delaminationsneigung, insbesondere im Kontaktbereich, beispielsweise einer Biegebeanspruchung in einer Geldbörse, deutlich verringert oder vollständig beseitigt wird. Um ein solches verbessertes Halbzeug herzustellen, wird eine Vorrichtung zum Herstellen eines Halbzeugs aus einem Substrat, einer Schaltungsstruktur mit mindestens einem Chipkontaktbereich und eine Antennenstruktur mit einem Antennenkontaktbereich vorgeschlagen, wobei die Vorrichtung umfasst: einen Aktuator, eine Gegenstruktur, eine Steuereinheit sowie eine über eine Steuereinheit angetriebene Antriebseinheit, über die der Aktuator und die Gegenstruktur aufeinander zu und voneinander weg bewegt werden können, und eine Bereitstellungseinrichtung zum Bereitstellen und/oder Zuführen des Substrats, der Schaltungsstruktur und der Antennenstruktur, so dass die Antennenstruktur und die Schaltungsstruktur auf dem Substrat so aufgebracht sind, dass der mindestens eine Antennenkontaktbereich und der mindestens eine Chipkontaktbereich zueinander benachbart sind und sich zumindest teilweise flächig in einem Überlappungsbereich überlappen. Erfindungsgemäß ist vorgesehen, dass der Aktuator und die Gegenstruktur so aufeinander zubewegbar sind, dass mindestens eine Durchgangsöffnung in dem Überlappungsbereich ausgebildet wird, die den mindestens einen Antennenkontaktbereich und den mindestens einen Chipkontaktbereich durchdringt. Ein Halbzeug ist besonders geeignet als Bestandteil, vorzugsweise als Inlay eines Sicherheitsdokuments verwendet zu werden. Das Halbzeug wird verwendet, um es mit weiteren Folien oder Substratschichten zu einem Sicherheitsdokumentkörper des Sicherheitsdokuments, vorzugsweise in einem Laminationsverfahren zusammenzufügen. Die Vorrichtung zur Herstellung eines Halbzeugs kann zu einer Vorrichtung zur Herstellung eines Sicherheitsdokuments erweitert werden. Eine solche Vorrichtung zur Herstellung eines Sicherheitsdokuments umfasst dann alle Merkmale einer Vorrichtung zum Herstellen eines Halbzeugs.

Bei einer bevorzugten Ausführungsform wird die Durchgangsöffnung so ausgebildet, dass diese zusätzlich auch das Substrat durchdringt. Hierdurch wird es möglich, eine formschlüssige Verbindung, die durch den Kontaktbereich hindurch ausgebildet ist, in Laminationskörpern zu schaffen, deren das Halbzeug umhüllende Materialschichten aus einem thermoplastischen Material bestehen, welches von dem der Substratschicht des Halbzeugs verschieden ist. Auch wenn diese Substratschicht des Halbzeugs selbst ein thermoplastisches Material aufweist, kann eine stärkere Verbindung zwischen den umhüllenden Materialen geschaffen werden, wenn diese aus demselben Kunststoffmaterial geschaffen sind und beispielsweise eine geringere Erweichungstemperatur aufweisen, als das Substrat des Halbzeugs.

Besonders bevorzugt wird die mindestens eine Durchgangsöffnung so ausgebildet, dass das Material des Chipkontaktbereichs und des Antennenkontaktbereichs lediglich verdrängt, jedoch nicht ausgestanzt wird. Besteht die Substratschicht vorzugsweise aus einem Kunststoffmaterial, so findet ein mikroskopisches "Verkrallen" der Materialien der Kontaktbereiche miteinander und in der Regel zusätzlich mit dem Material der Substratschicht statt, so dass mikroskopisch formschlüssige Verbindungen ausgebildet werden, die zu einer besseren elektrischen Kontaktierung und zu einer verbesserten Verbindung zwischen der Antennenstruktur und der Schaltungsstruktur auf der einen Seite und dem Substrat auf der anderen Seite führen.

Bei einer bevorzugten Ausführungsform wird beim Herstellen des elektrischen Kontakts Ultraschall so eingekoppelt, dass sich zwischen dem mindesten einen Antennenkontaktbereich und dem mindestens einen Chipkontaktbereich eine thermisch ausgebildete Verbindung, insbesondere eine Reibschweißverbindung, ergibt. Vorzugsweise ist somit der Aktuator eine Sonotrode zum Einkoppeln von Ultraschall. Hierdurch bietet sich der Vorteil, eine für Reinraumproduktion geeignete Verbindungstechnik zu verwenden und darüber hinaus eine sehr schnelle Ausbildung der Verbindung zu bewirken. Im Gegensatz zu anderen Verbindungstechniken, wie beispielsweise einem Kleben, treten keine störenden Nebenprodukte auf. Darüber hinaus ist eine besonders zuverlässige Kontaktierung mit geringen Ausschusshäufigkeiten möglich. Beim Herstellen des Kontakts werden das Substrat mit der Antennenstruktur und der Schaltungsstruktur zwischen einer Sonotrode und einer Gegenstruktur angeordnet, die Sonotrode und die Gegenstruktur aufeinander zubewegt, so dass der mindestens eine Antennenkontaktbereich und der mindestens eine Chipkontaktbereich sowie das Substrat im Überlappungsbereich aufgrund eines durch die Sonotrode und die Gegenstruktur ausgeübten ersten Anpressdrucks fixiert sind.

In der Regel wird bereits bei diesem Fixieren die mindestens eine Durchgangsöffnung in dem Überlappungsbereich ausgebildet. Das Fixieren wird vorzugsweise so ausgeführt, dass mindestens eine Spitze des Aktuators (der Sonotrode) und/oder mindestens eine Spitze der Gegenstruktur (eines Gegenlagers) die mindestens eine Durchgangsöffnung in dem Überlappungsbereich ausbilden. Die Sonotrode weist somit vorzugsweise mindestens eine Spitze auf, die geeignet ist, insbesondere über eine Verdrängung von Material eine Durchgangsöffnung zumindest durch das Material des Chipkontaktbereichs und des Antennenkontaktbereichs auszubilden.

Um zuverlässig auch die Substratschicht zu durchdringen, ist bei einer Ausführungsform die Gegenstruktur mit einer angepassten Aussparung in einer ansonsten im Wesentlichen ebenen Fläche ausgebildet, um die Spitze beim Ausbilden der Durchgangsöffnung "aufzunehmen".

Alternativ ist es möglich, die Gegenstruktur ebenfalls mit einer Spitze auszubilden. In diesem Fall werden die Sonotrode und die Gegenstruktur so aufeinander zubewegt, dass die mindestens eine Spitze der Sonotrode und die Spitze der Gegenstruktur einander berühren. Andere Ausführungsformen können vorsehen, dass nur die Gegenstruktur eine Spitze aufweist und gegebenenfalls die Sonotrode eine hierzu angepasste Ausnehmung bzw. Aussparung aufweist.

Hat diese Fixierung stattgefunden, so kann über ein Einkoppeln von Ultraschall über die Sonotrode der elektrische Kontakt zwischen dem Antennenkontaktbereich und dem Chipkontaktbereich ausgebildet werden. Zeitgleich hierzu oder anschließend ist bei einer Ausführungsform vorgesehen, den Anpressdruck auf einen zweiten Anpressdruck zu erhöhen

Bei einigen Materialien kann es vorteilhaft sein, wenn das Ausbilden der Durchgangsöffnung während oder unmittelbar nach dem Einkoppeln von Ultraschall zum Ausbilden des elektrischen Kontakts erfolgt, da über die lokal erzeugte Reibwärme die Materialien leichter verformbar sind und insbesondere das unmittelbar an dem Kontaktbereich angrenzende, vorzugsweise aus Kunststoff bestehende Material der Substratschicht leichter verformbar ist.

Findet sogar ein lokales Aufschmelzen im unmittelbaren Kontaktbereich zu der Antennenstruktur und/oder dem Chipkontaktbereich des Substratmaterials vor, nach oder während des Ausbildens der mindestens einen Durchgangsöffnung statt, so können sich zwischen den verdrängten der Materialien der Kontaktbereiche und dem lokal aufgeschmolzenen Substratmaterial mikroskopische formschlüssige Verbindungen im Randbereich der Durchgangsöffnung ausbilden.

Die Antennenstruktur wird besonders bevorzugt mittels einer leitfähigen Zubereitung auf das Substrat aufgedruckt.

Das Halbzeug wird besonders bevorzugt nach dem Ausbilden des elektrischen Kontakts und der Durchgangsöffnung mit mindestens einem weiteren Substrat in einem Substratschichtenstapel geschichtet, so dass die Antennenstruktur und die Schaltungsstruktur zwischen dem Substrat und dem mindestens einen weiteren Substrat angeordnet sind und der Substratschichtenstapel durch Anwendung von Druck und Erwärmen zu einem Laminatkörper verbunden, so dass bei dem laminierenden Verbinden durch die mindestens eine Durchgangsöffnung eine formschlüssige Verbindung des an der Lamination beteiligten Materials gebildet wird.

Bei einer bevorzugten Weiterbildung der Erfindung ist vorgesehen, dass in dem Überlappungsbereich mehrere Durchgangsöffnungen ausgebildet werden.

Um mehrere Durchgangsöffnungen in dem Überlappungsbereich zu schaffen, ist es vorteilhaft, wenn diese zeitgleich, beispielsweise durch mehrere Spitzen der Sonotrode, gebildet werden.

Es versteht sich für den Fachmann, dass die Antennenstruktur und die Schaltungsstruktur jeweils mehrere Antennenkontaktbereich bzw. Chipkontaktbereiche aufweisen können, die jeweils paarweise miteinander entsprechend elektrisch leitend verbunden werden. Vorzugsweise werden diese Kontakte zwischen der Schaltungsstruktur und der Antennenstruktur in den unterschiedlichen voneinander getrennten Überlappungsbereichen zeitgleich durch ein und dieselbe Sonotrode und ein und dieselbe Gegenstruktur ausgebildet.

Die Erfindung wird nachfolgend unter Bezugnahme auf eine Zeichnung näher erläutert. Hierbei zeigen:
- Fig. 1: eine Draufsicht auf ein Substrat mit einer Antennenstruktur sowie eine als Chipmodul ausgebildete Schaltungsstruktur;
- Fig. 2: eine Draufsicht auf das Substrat nach Fig. 1, wobei die Schaltungsstruktur und die Antennenstruktur miteinander verbunden sind;
- Fig. 3: ein Sicherheitsdokument mit einem Halbzeug nach dem Stand der Technik;
- Fig. 4: eine Schnittdarstellung eines Halbzeugs, bei dem im Bereich einer Kontaktierung Durchgangsöffnungen ausgebildet sind;
- Fig. 5: eine Schnittdarstellung durch ein Sicherheitsdokument, in welches das Halbzeug nach Fig. 4 integriert ist; und
- Fig. 6: eine schematische Darstellung einer Vorrichtung zum Herstellen eines Halbzeugs und/oder eines Sicherheitsdokuments.

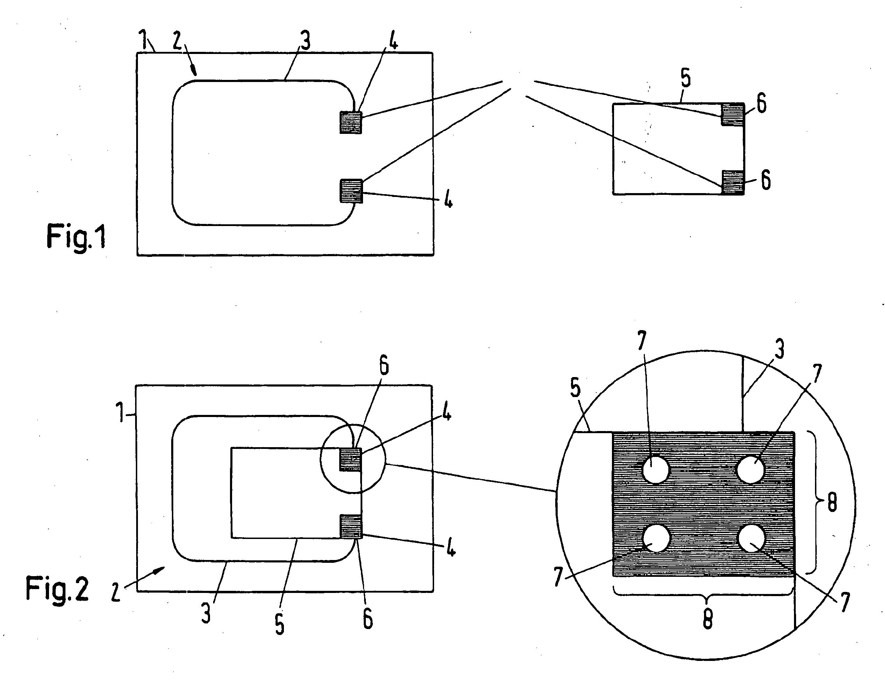

In Fig. 1 ist eine Draufsicht auf ein Substrat 1 schematisch dargestellt. Auf dem Substrat 1 ist eine Antennenstruktur 2 aufgebracht. Die Antennenstruktur 2 umfasst eine Leiterschleife 3 sowie zwei Antennenkontaktbereiche 4. Die Antennenkontaktbereiche 4 sind flächig ausgebildet leitende Kontakte, die mit anderen Kontakten verbunden werden können. Neben der Substratschicht 1 ist eine als Chipmodul ausgebildete Schaltungsstruktur 5 schematisch dargestellt. Die Schaltungsstruktur ist vorzugsweise als integrierte Schaltung ausgebildet. Die Schaltungsstruktur 5 weist zwei Chipkontaktbereiche 6 auf. Die Chipkontaktbereiche 6 sind flächig ausgebildete elektrisch leitende Kontakte. Die Antennenkontaktbereiche 4 und die Chipkontaktbereiche 6 sind hinsichtlich ihrer relativen Abstände und flächigen Ausdehnung so aneinander angepasst, dass diese einander zumindest teilflächig paarweise, vorzugsweise vollflächig, überlappen, wenn die Schaltungsanordnung 5 (das Chipmodul) ebenfalls auf dem Substrat 2 angeordnet wird.

Bei der Schaltungsanordnung 5 kann es sich um jede beliebige elektronische Schaltungsanordnung handeln, beispielsweise um ein Chipmodul einer Smartcard. Ein solches in Halbleitertechnik gefertigtes Chipmodul umfasst in der Regel Speicherbereiche, in denen Informationen speicherbar sind. Zusätzlich umfasst ein solches Chipmodul in der Regel eine zentrale Prozessoreinheit, die ein Aus- und Einlesen der Informationen sowie eine Kommunikationssteuerung mit einer externen Vorrichtung ermöglicht. Um dieses zu ermöglichen, sind elektrisch leitfähige Kontaktierungen zwischen den entsprechenden Antennenkontaktbereichen 4 und den entsprechenden Chipkontaktbereichen 6 notwendig. Diese können beispielsweise über elektrisch leitende Kleber ausgebildet werden. Bevorzugter werden jedoch die Verbindungen mittels einer Anwendung von Ultraschall über ein Reibschweißverfahren hergestellt. Es können jedoch auch andere dem Fachmann bekannte Techniken zum Kontaktieren der Chipkontaktbereiche 6 mit den Antennenkontaktbereichen 4 verwendet werden.

In Fig. 2 ist schematisch die Anordnung der Schaltungsanordnung 5 nach Fig. 1 auf dem Substrat 1 nach Fig. 1 mit der darauf aufgebrachten Antennenstruktur 2 dargestellt. Gleiche technische Merkmale sind in allen Figuren mit denselben Bezugszeichen versehen. Das Chipmodul bzw. die Schaltungsanordnung 5 ist so relativ zu der Antennenstruktur 2 angeordnet, dass sich jeweils ein Antennenkontaktbereich 4 und ein Chipkontaktbereich 6 vollflächig überlagern. Die Kontaktbereiche sind hierbei einander zugewandt. Um einen verbesserten Schutz gegen ein Austauschen und/oder Manipulieren der Schaltungsanordnung 5 auf dem Substrat 1 zu verhindern oder zumindest erheblich zu erschweren, sind Durchgangsöffnungen 7 in einem Überlappungsbereich 8 ausgebildet, in dem sich einer der Antennenkontaktbereiche 4 und einer der Chipkontaktbereiche 6 flächig überlagern. Die Durchgangsöffnungen 7 durchdringen sowohl den Chipkontaktbereich 6 als auch den Antennenkontaktbereich 4 vollständig. Vorzugsweise durchdringen die Durchgangsöffnungen 7 ebenfalls das Substrat 1. Die Durchgangsöffnungen 7 werden vorzugsweise so gebildet, dass das Material des Antennenkontaktbereichs 4 und des Chipkontaktbereichs 6 verdrängt und nicht wie beispielsweise beim Stanzen entfernt werden. Hierdurch wird erreicht, dass im mikroskopischen Bereich eine formschlüssige "Verzahnung" der Kontaktbereiche und gegebenenfalls zusätzlich mit dem Material des Substrats 1 erfolgt.

Wird ein so hergestelltes Halbzeug, welches die Antennenstruktur 2, die Schaltungsstruktur 5 sowie das Substrat umfasst, wobei die Antennenkontaktbereiche und die Chipkontaktbereiche miteinander elektrisch kontaktiert sind und in mindestens einem Überlappungsbereich 8 eines der Antennenkontaktbereiche 4 und der Chipkontaktbereiche 6 zusätzlich mindestens eine, vorzugsweise mehrere, Durchgangsöffnungen 7 ausgebildet sind, in ein Dokument integriert, so kann bei einem Einlaminieren dieses Halbzeugs in einen Laminationskörper aus thermoplastischen Kunststoffmaterialien während des Laminationsvorgangs aufgeschmolzenes thermoplastisches Kunststoffmaterial durch die Durchgangsöffnung hindurch eine formschlüssige Verbindung ausbilden. Somit wird ein Entfernen oder Austauschen des Chipmoduls erheblich erschwert, selbst wenn die einzelnen den Laminationskörper bildenden Kunststoffschichten im Bereich der Schaltungsanordnung (des Chipmoduls) delaminiert werden. Im Bereich der Kontaktierung ist eine beschädigungsfreie Trennung des Chipkontakts, d.h. des Chipkontaktbereiches, von dem entsprechenden Antennenkontakt, d.h. dem Antennenkontaktbereich, zerstörungsfrei aufgrund der durch die Durchgangsöffnung 7 gebildeten formschlüssigen Verbindung in der Regel nicht möglich. Selbst wenn eine solche Zerstörung der Verbindung bewerkstelligt wird, ist ein erneutes Einpassen eines ausgetauschten Chipmoduls ohne ein Hinterlassen von erkennbaren Spuren stark erschwert, da die Durchgangsöffnungen in dem Antennenkontaktbereich und in dem ausgetauschten Chipmodul (Schaltungsanordnung 5) zur Deckung gebracht werden müssen. Zugleich ist erneut ein elektrischer Kontakt auszubilden. In der Regel lassen sich Abweichungen an den dann neu entstehenden Durchgangsöffnungen bei genauerer Untersuchung ohne eine Zerstörung des Laminationskörpers, sofern dieser aus transparenten Kunststoffmaterialien ist, erkennen.

Ist das Substratmaterial 1 ein thermoplastisches Kunststoffmaterial, so ist es nicht unbedingt notwendig, dass die Durchgangsöffnungen 7, die den Antennenkontaktbereich 4 und den Chipkontaktbereich 6 durchdringen, ebenfalls das Substratmaterial durchdringen. In einem solchen Fall können die formschlüssigen Verbindungen durch die Durchgangsöffnungen 7 bei einer Weiterverarbeitung des Halbzeugs auch zwischen dem Kunststoffmaterial des Substrats 1 und dem Kunststoffmaterial einer darüber gelagerten Kunststoffschicht ausgebildet werden, die die Antennenstruktur 2 und die Schaltungsstruktur 5 überdeckt, vorzugsweise vollflächig.

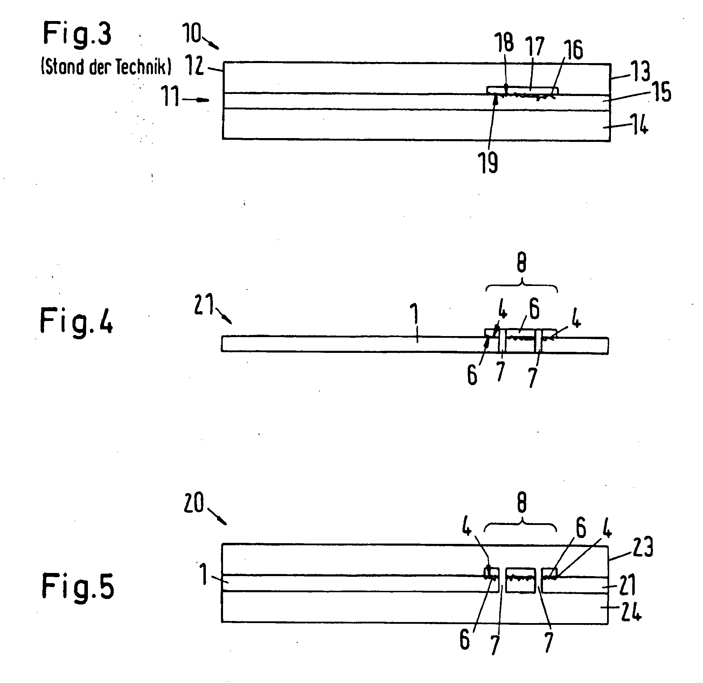

In Fig. 3 ist eine Schnittdarstellung eines Sicherheitsdokuments 10 mit einem Halbzeug 11 nach dem Stand der Technik, das als so genanntes Inlay bezeichnet wird, schematisch dargestellt. Das Sicherheitsdokument 10 umfasst einen Dokumentenkörper 12, der aus einem so genannten Oberlaminat 13, einem so genannten Unterlaminat 14 und dem hierzwischen angeordneten Halbzeug 11 in einem Laminationsprozess gebildet ist. Das Halbzeug 11 umfasst ein Substrat 15, auf dem eine Antennenstruktur 16 sowie eine Schaltungsstruktur 17 aufgebracht sind, wobei ein Antennenkontaktbereich 18 der Antennenstruktur und ein Chipkontaktbereich 19 der Schaltungsstruktur 17 elektrisch miteinander kontaktiert sind, beispielsweise über einen elektrisch leitenden Kleber miteinander verbunden sind.

In Fig. 4 ist schematisch eine Schnittansicht durch ein erfindungsgemäßes Halbzeug 21 dargestellt. Dieses umfasst ein Substrat 1, einen Antennenkontaktbereich 4 sowie einen Chipkontaktbereich 6, die einander überlagert sind und beispielsweise über eine Reibschweißverbindung elektrisch miteinander kontaktiert sind. Die Antennenstruktur und die Schaltungsstruktur sind in dieser vereinfachten schematischen Schnittdarstellung nicht gezeigt. In dem Überlappungsbereich 8 sind Durchgangsöffnungen 7 ausgebildet, die sowohl den Chipkontaktbereich 6, den Antennenkontaktbereich 4 als auch das Substrat 1 durchdringen.

In Fig. 5 ist das Halbzeug 21 nach Fig. 4 in ein Sicherheitsdokument 20 integriert, welches einen Dokumentkörper 22 aufweist, der aus einem Oberlaminat 23, einem Unterlaminat 24 und dem dazwischen geschichteten Halbzeug 21 gebildet ist. Im Laminationsvorgang sind die Durchgangsöffnungen 7 mit Material des Oberlaminats 23 und des Unterlaminats 24 und sofern das Substrat 1 des als Inlays verwendeten Halbzeugs 21 ebenfalls aus einem thermoplastischen Kunststoff besteht, der ähnlich auch mit dem Material des Substrats 1 oder gleich den Materialien des Ober- und Unterlaminats 23, 24 ist, gefüllt. Hierdurch ist durch die Durchgangsöffnungen 7 eine formschlüssige Verbindung ausgebildet. Besonders bevorzugt weisen das Oberlaminat 23 und das Unterlaminat 24 sowie das Substrat 1 dasselbe Kunststoffmaterial oder zumindest ein Kunststoffmaterial auf Basis desselben Polymers auf, so dass eine möglichst monolithische Verbindung durch die Durchgangsöffnungen 7 ausgebildet wird. Hierdurch wird, wie oben bereits beschrieben, die Fälschungssicherheit deutlich erhöht.

Eine Ausbildung einer oder mehrerer formschlüssiger Verbindungen durch die mindestens eine Durchgangsöffnung oder die mehreren Durchgangsöffnungen bewirkt ferner das eine Dalaminations- oder Zerfallsneigung des mit dem Halbzeug als Bestandteil gebildeten Sicherheitsdokuments deutlich verringert wird. Eine Alltagstauglichkeit wird erhöht, insbesondere gegenüber Biege- und/oder Verwindungsbeanspruchungen.

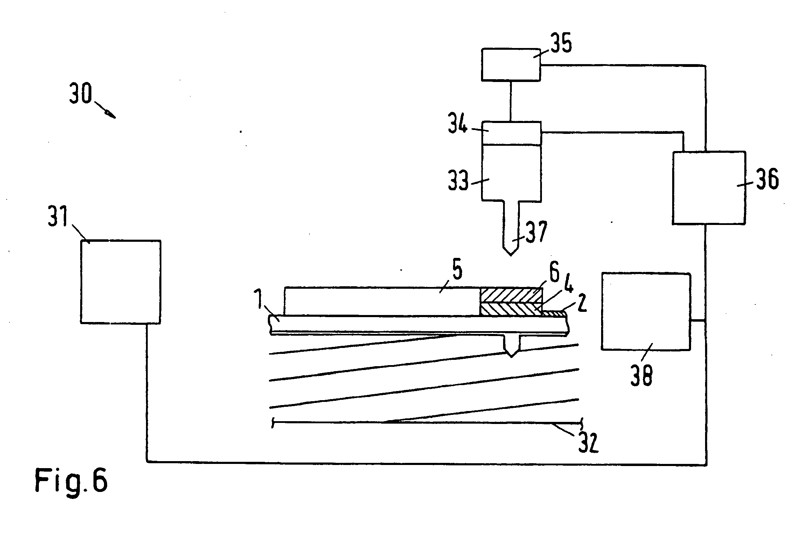

In Fig. 6 ist schematisch eine Vorrichtung zum Herstellen eines erfindungsgemäßen Halbzeugs bzw. eine Vorrichtung zum Herstellen eines Sicherheitsdokuments vereinfacht schematisch dargestellt. Die Vorrichtung 30 umfasst eine Bereitstellungseinrichtung 31. Diese ist ausgebildet, das Substrat 1, die Antennenstruktur 2 sowie die Schaltungsstruktur 5 bereitzustellen bzw. zuzuführen. Die Bereitstellungseinrichtung 31 kann demnach eine Vielzahl von einzelnen Untereinrichtungen umfassen, beispielsweise kann das Bereitstellen des Substrats 1 und der Antennenstruktur 2 in der Weise erfolgen, dass die Antennenstruktur 2 mittels einer leitfähigen Zubereitung auf das Substrat 1 aufgedruckt wird. Die Vorrichtung umfasst ferner eine so genannte Gegenstruktur 32, auf der das Substrat mit der Antennenstruktur 2 und der Schaltungsstruktur 5 angeordnet wird. Die Schaltungsstruktur 5 kann gemeinsam mit dem Substrat 1 und der Antennenstruktur 2 zugeführt werden oder erst im Bereich der Gegenstruktur 32 auf dem Substrat 1 und der Antennenstruktur 2 entsprechend positioniert angeordnet werden. Ebenso ist es möglicht, dass vor diesem Anordnen auch erst die Antennenstruktur 2 im Bereich der Gegenstruktur 32 auf das Substrat 1 aufgebracht wird. In jedem Fall werden die Antennenstruktur 2 und die Schaltungsstruktur 5 so relativ zueinander angeordnet, dass mindestens ein Antennenkontaktbereich 4 und ein Chipkontaktbereich 6 einander teilflächig, vorzugsweise vollflächig, in einem Überlappungsbereich 8 überlappen. In diesem wird ein elektrischer Kontakt zwischen dem Antennenkontaktbereich 4 und dem Chipkontaktbereich 6 ausgebildet.

Bei der dargestellten Ausführungsform umfasst die Vorrichtung hierfür einen als Sonotrode 33 ausgebildeten Aktuator. Die Sonotrode 33 ist mit einem Ultraschallgeber 34 verbunden. Der als Sonotrode 33 ausgebildete Aktuator ist mit einer Antriebseinheit 35 gekoppelt, die eine Relativbewegung zwischen dem als Sonotrode 33 ausgebildeten Aktuator und der Gegenstruktur 32 bewirken kann. Der Aktuator kann auf die Gegenstruktur zu- oder von dieser wegbewegt werden. Dieses wird über eine Steuereinheit 36 gesteuert. Um den Chipkontaktbereich 6 und den Antennenkontaktbereich 4 miteinander zu verbinden, wird der Aktuator über die Antriebseinheit 35 zunächst auf die Gegenstruktur 32 zubewegt, bis das Substrat, der Antennenkontaktbereich 4 und der Chipkontaktbereich 6 zueinander über einen ersten Anpressdruck des als Sonotrode 33 ausgebildeten Aktuators und der Gegenstruktur 32 fixiert ist. Die Sonotrode 33 ist mit einer Spitze 37 ausgebildet. Diese Spitze dringt durch den Chipkontaktbereich 6, den Antennenkontaktbereich 4 sowie das darunter befindliche Material des Substrats 1 und dringt in eine Aussparung 38 der Gegenstruktur 32 ein. Hierdurch wird eine Durchgangsöffnung (nicht dargestellt) ausgebildet, wie sie beispielsweise in Fig. 5 gezeigt ist. Über den Ultraschallgeber 34 wird nun Ultraschall in den Chipkontaktbereich 6 eingekoppelt. Hierdurch kommt es zu Vibrationen an der Grenzfläche zwischen dem Chipkontakibereich 6 und dem Antennenkontaktbereich 4, so dass sich hier eine thermische Erwärmung einstellt, die eine so genannte Reibschweißverbindung zwischen dem Antennenkontaktbereich 4 und dem Chipkontaktbereich 6 ausbildet. Durch eine Erhöhung des Anpressdrucks während der Ultraschallanwendung oder nach der Ultraschallanwendung wird die Kontaktierung verbessert.

Nach dem Kontaktieren und Ausbilden der mindestens einen Durchgangsöffnung wird über die Antriebseinheit 35 der als Sonotrode 33 ausgebildete Aktuator von der Gegenstruktur 32 wegbewegt. Das fertig hergestellte Halbzeug 21 wird einer weiteren Verarbeitungseinrichtung 38 zugeführt, in der das Halbzeug 21 beispielsweise mit weiteren Substratschichten, die beispielsweise ein Oberlaminat und ein Unterlaminat gemäß Fig. 5 darstellen, zu einem Dokumentkörper laminiert, der mit weiteren Sicherheitsmerkmalen, die ein Fälschen, Verfälschen oder Nachahmen des Sicherheitsdokuments erschweren und/oder unmöglich machen, versehen wird.

Es ergibt sich für den Fachmann, dass die schematische Zeichnung nach Fig. 6 lediglich eine beispielhafte Ausführungsform darstellt. Vorzugsweise ist die Sonotrode so ausgebildet, dass sie mehrere Spitzen aufweist, die zeitgleich mehrere Durchgangsöffnungen in einem Überlappungsbereich einer der Antennenkontaktbereiche und eines darüber gelagerten Chipkontaktbereichs ausbildet. Ferner ist es vorteilhaft, wenn mehrere Antennenkontaktbereiche und Chipkontaktbereiche durch eine Sonotrode zeitgleich miteinander kontaktiert und hierbei die Durchgangsöffnungen durch die entsprechenden Überlappungsbereiche ausgebildet werden.

Andere Ausführungsformen können jedoch vorsehen, dass zunächst der elektrische Kontakt zwischen dem Antennenkontaktbereich und dem Chipkontaktbereich bzw. den mehreren Antennenkontaktbereichen und den Chipkontaktbereichen ausgebildet werden und erst anschließend ein oder mehrere Durchgangsöffnungen in den jeweiligen Überlappungsbereichen ausgebildet werden.

Bei den beschriebenen Ausführungsformen ist jeweils das Chipmodul der Schaltungsstruktur auf einer zuvor auf dem Substrat aufgebrachten Antennenstruktur dargestellt. Es ergibt sich für den Fachmann, dass auch zunächst das Chipmodul auf dem Substrat angeordnet werden kann und anschließend die Antennenstruktur relativ hierzu auf dem Chipkontaktbereich und dem Substrat angeordnet werden kann. Zum Ausbilden der Durchgangsöffnungen ist es vorteilhaft, wenn die Spitzen auf der Sonotrode ausgebildet sind. Alternativ sind jedoch Ausführungsformen denkbar, bei denen die Gegenstruktur Spitzen umfasst, die gegebenenfalls mit Spitzen der Sonotrode korrespondieren und gemeinsam die Durchgangsöffnungen oder alleine die Durchgangsöffnungen ausbilden.

### Bezugszeichenliste

- 1: Substrat
- 2: Antennenstruktur
- 3: Leiterschleife
- 4: Antennenkontaktbereich
- 5: Schaltungsstruktur
- 6: Chipkontaktbereich
- 7: Durchgangsöffnung
- 8: Überlappungsbereich
- 10: Sicherheitsdokument (Stand der Technik)
- 11: Halbzeug (Stand der Technik)
- 12: Dokumentkörper
- 13: Oberlaminat
- 14: Unterlaminat
- 15: Substrat
- 16: Antennenstruktur
- 17: Schaltungsstruktur
- 18: Antennenkontaktbereich
- 19: Chipkontaktbereich
- 20: Sicherheitsdokument
- 21: Halbzeug
- 22: Dokumentkörper
- 23: Oberlaminat
- 24: Unterlaminat
- 30: Vorrichtung zum Herstellen eines Halbzeugs oder eines ein Halbzeug umfassenden Sicherheitsdokuments
- 31: Bereitstellungseinrichtung
- 32: Gegenstruktur
- 33: Sonotrode
- 34: Ultraschallgeber
- 35: Antriebseinheit
- 36: Steuereinheit
- 37: Spitze
- 38: Verarbeitungseinrichtung

## Patentansprüche

1. Verfahren zum Herstellen eines Halbzeugs (21) umfassend die Schritte:
Bereitstellen eines Substrats (1),
Bereitstellen einer Schaltungsstruktur (5) mit mindestens einem Chipkontaktbereich (6),
Aufbringen einer Antennenstruktur (2) mit einem Antennenkontaktbereich (4) und der Schaltungsstruktur (5) auf das Substrat (1), so dass der mindestens eine Antennenkontaktbereich (4) und der mindestens eine Chipkontaktbereich (6) zueinander benachbart sind und sich zumindest teilweise flächig in einem Überlappungsbereich (8) überlappen, und
Herstellen eines elektrischen Kontakts zwischen dem mindestens einen Antennenkontaktbereich (4) und dem mindestens einen Chipkontaktbereich (6) in dem Überlappungsbereich (8),
**dadurch gekennzeichnet, dass**
mindestens eine Durchgangsöffnung (7) im Überlappungsbereich (8) ausgebildet wird, die den mindestens einen Antennenkontaktbereich (4) und den mindestens einen Chipkontaktbereich (6) durchdringt.

2. Verfahren nach Anspruch 1, **dadurch gekennzeichnet, dass** die mindestens eine Durchgangsöffnung so ausgebildet wird, dass die mindestens eine Durchgangsöffnung (7) zusätzlich auch das Substrat (1) durchdringt.

3. Verfahren nach einem der vorangehenden Ansprüche, **dadurch gekennzeichnet, dass** beim Herstellen des elektrischen Kontakts Ultraschall so eingekoppelt wird, dass sich zwischen dem mindestens einen Antennenkontaktbereich (4) und dem mindestens einen Chipkontaktbereich (6) eine thermisch ausgebildete Verbindung, insbesondere eine Reibschweißverbindung, ergibt.

4. Verfahren nach einem der vorangehenden Ansprüche, **dadurch gekennzeichnet, dass** beim Herstellen des Kontakts das Substrat (1) mit der Antennenstruktur (2) und der Schaltungsstruktur (5) zwischen einer Sonotrode (33) und einer Gegenstruktur (32) angeordnet wird, die Sonotrode (33) und die Gegenstruktur (32) aufeinander zu bewegt werden, so dass der mindestens eine Antennenkontaktbereich (4) und der mindestens eine Chipkontaktbereich (6) sowie das Substrat (1) in dem Überlappungsbereich (8) aufgrund eines durch die Sonotrode (33) und die Gegenstruktur (32) ausgeübten ersten Anpressdrucks fixiert werden und mindestens eine Spitze (37) der Sonotrode (33) und/oder mindestens eine Spitze (37) der Gegenstruktur (32) die mindestens eine Durchgangsöffnung (7) in dem Überlappungsbereich (8) ausbilden

5. Verfahren nach einem der vorangehenden Ansprüche, **dadurch gekennzeichnet, dass** die Antennenstruktur (2) mittels einer leitfähigen Zubereitung auf das Substrat (1) aufgedruckt wird.

6. Verfahren nach einem der vorangehenden Ansprüche, **dadurch gekennzeichnet, dass** die mindestens eine Durchgangsöffnung (7) vor dem Herstellen des elektrischen Kontakts ausgebildet wird.

7. Verfahren nach einem der vorangehenden Ansprüche, **dadurch gekennzeichnet, dass** das Substrat (1) nach dem Ausbilden der des elektrischen Kontakts mit mindestens einem weiteren Substrat (1) in einen Substratschichtenstapel geschichtet wird, so dass die Antennenstruktur (2) und die Schaltungsstruktur (5) zwischen dem Substrat (1) und dem mindestens einen weiteren Substrat angeordnet sind und der Substratschichtenstapel durch Anwendung von Druck und Erwärmen zu einem Laminatkörper verbunden wird, so dass bei dem laminierenden Verbinden durch die mindestens eine Durchgangsöffnung (7) eine formschlüssige Verbindung des an der Lamination beteiligten Materials gebildet wird.

8. Verfahren zum Herstellen eines Sicherheitsdokuments (20) umfassend die Herstellung eines Halbzeugs (21) nach einem der Patentansprüche 1 bis 7.

9. Halbzeug (21) umfassend
mindestens ein Substrat (1),
eine Schaltungsstruktur (5) mit mindestens einem Chipkontaktbereich (6),
eine Antennenstruktur (2) mit mindestens einem Antennenkontaktbereich (4), wobei die Antennenstruktur (2) und die Schaltungsstruktur (5) auf das Substrat (1) so aufgebracht sind, dass der mindestens eine Antennenkontaktbereich (4) und der mindestens eine Chipkontaktbereich (6) zueinander benachbart sind und sich zumindest teilweise flächig in einem Überlappungsbereich (8) überlappen und ein elektrischer Kontakt zwischen dem mindestens einen Antennenkontaktbereich (4) und dem mindestens einen Chipkontaktbereich (6) in dem Überlappungsbereich (8) ausgebildet ist,
**dadurch gekennzeichnet, dass**
mindestens eine Durchgangsöffnung (7) im Überlappungsbereich (8) ausgebildet ist, die den mindestens einen Antennenkontaktbereich (4) und den mindestens einen Chipkontaktbereich (6) durchdringt.

10. Halbzeug (21) nach Anspruch 9, **dadurch gekennzeichnet, dass** die mindestens eine Durchgangsöffnung (7) zusätzlich auch das Substrat (1) durchdringt.

11. Halbzeug (21) nach Anspruch 9 oder 10, **dadurch gekennzeichnet, dass** der elektrische Kontakt mittels eingekoppelten Ultraschalls thermisch, insbesondere als eine Reibschweißverbindung, ausgebildet ist.

12. Halbzeug (21) nach einem der Ansprüche 9 bis 11, **dadurch gekennzeichnet, dass** das Substrat (1) mit mindestens einem weiteren Substrat (1) in einen Laminatkörper integriert ist, so dass die Antennenstruktur (2) und die Schaltungsstruktur (5) zwischen dem Substrat (1) und dem mindestens einen weiteren Substrat (1) angeordnet sind und durch die mindestens eine Durchgangsöffnung (7) eine formschlüssige Verbindung des an der Lamination beteiligten Materials gebildet ist.

13. Sicherheitsdokument umfassend ein Halbzeug nach einem der Patentansprüche 9 bis 12.

14. Verwendung eines Halbzeugs (21) mit den Merkmalen eines der Patentansprüche 9 bis 12 als Bestandteil zur Herstellung eines Sicherheitsdokuments (20).

15. Vorrichtung (30) zum Herstellen eines Halbzeugs (21) aus mindestens:
einem Substrat (1),
einer Schaltungsstruktur (5) mit mindestens einem Chipkontaktbereich (6),
und einer Antennenstruktur (2) mit einem Antennenkontaktbereich (4),
wobei die Vorrichtung umfasst:
einen Aktuator,
eine Gegenstruktur (32),
eine Steuereinheit (36) sowie
eine über die Steuereinheit (36) angesteuerte Antriebseinheit (35), über die der Aktuator und die Gegenstruktur (32) aufeinander zu und voneinander wegbewegt werden können,
und eine Bereitstellungseinrichtung (31) zum Bereitstellen und/oder Zuführen des Substrats (1),
der Schaltungsstruktur (5) und der Antennenstruktur (2),
so dass die Antennenstruktur (2) und die Schaltungsstruktur (5) auf das Substrat (1) so aufgebracht sind, dass der mindestens eine Antennenkontaktbereich (4) und der mindestens eine Chipkontaktbereich (6) zueinander benachbart sind und sich zumindest teilweise flächig in einem Überlappungsbereich (8) überlappen,
**dadurch gekennzeichnet, dass**
der Aktuator und die Gegenstruktur (32) so aufeinander zubewegbar sind, dass mindestens eine Durchgangsöffnung (7) im Überlappungsbereich (8) ausgebildet wird, die den mindestens einen Antennenkontaktbereich (4) und den mindestens einen Chipkontaktbereich (6) durchdringt.

## Claims

1. Method for producing a semi-finished good (21) comprising the steps:
- providing a substrate (1),
- providing a circuit structure (5) with at least one chip contact region (6),
- application of an antenna structure (2) with an antenna contact region (4) and the circuit structure (5) to the substrate (1) so that the at least one antenna contact region (4) and the at least one chip contact region (6) are adjacent to each other and overlap at least partially superficially in an overlapping region (8), and
- producing an electrical contact between the at least one antenna contact region (4) and the at least one chip contact region (6) in the overlapping region (8),
**characterised in that** at least one pass-through opening (7) is formed in the overlapping region (8) and penetrates the at least one antenna contact region (4) and the at least one chip contact region (6).

2. Method according to claim 1, **characterised in that** the at least one pass-through opening is formed such that the at least one pass-through opening (7) also penetrates the substrate (1).

3. Method according to any one of the preceding claims, **characterised in that** on production of the electrical contact, ultrasound is coupled in such that a thermally formed connection, in particular a friction weld connection, results between the at least one antenna contact region (4) and the at least one chip contact region (6).

4. Method according to any one of the preceding claims, **characterised in that** on production of the contact, the substrate (1) with the antenna structure (2) and the circuit structure (5) is arranged between a sonotrode (33) and a counter-structure (32), the sonotrode (33) and the counter-structure (32) are moved towards each other such that the at least one antenna contact region (4) and the at least one chip contact region (6) and the substrate (1) are fixed in the overlapping region (8) because of a first contact pressure exerted by the sonotrode (33) and the counter-structure (32), and at least one tip (37) of the sonotrode (33) and/or at least one tip (37) of the counter-structure (32) form the at least one pass-through opening (7) in the overlapping region (8).

5. Method according to any one of the preceding claims, **characterised in that** the antenna structure (2) is printed onto the substrate (1) by means of a conductive preparation.

6. Method according to any one of the preceding claims, **characterised in that** the at least one pass-through opening (7) is formed before production of the electrical contact.

7. Method according to any one of the preceding claims, **characterised in that** after formation of the electrical contact, the substrate (1) is layered with at least one further substrate (1) in a substrate layer stack so that the antenna structure (2) and the circuit structure (5) are arranged between the substrate (1) and the at least one further substrate, and the substrate layer stack is joined into a laminated body by the application of pressure and heat, so that during the laminating connection, a form-fit connection of the material involved in the lamination is formed through the at least one pass-through opening (7).

8. Method for producing a security document (20) comprising the production of a semi-finished good (21) according to any one of claims 1 to 7.

9. Semi-finished good (21) comprising
- at least one substrate (1),
- a circuit structure (5) with at least one chip contact region (6),
- an antenna structure (2) with at least one antenna contact region (4), wherein the antenna structure (2) and the circuit structure (5) are applied to the substrate (1) such that the at least one antenna contact region (4) and the at least one chip contact region (6) are adjacent to each other and overlap at least partially superficially in an overlapping region (8), and an electrical contact is formed between the at least one antenna contact region (4) and the at least one chip contact region (6) in the overlapping region (8),
**characterised in that** at least one pass-through opening (7) is formed in the overlapping region (8) and penetrates the at least one antenna contact region (4) and the at least one chip contact region (6).

10. Semi-finished good (21) according to claim 9, **characterised in that** the at least one pass-through opening (7) also penetrates the substrate (1).

11. Semi-finished good (21) according to claim 9 or 10, **characterised in that** the electrical contact is formed thermally, in particular as a friction weld connection, by means of coupled-in ultrasound.

12. Semi-finished good (21) according to any one of claims 9 to 11, **characterised in that** the substrate (1) with at least one further substrate (1) is integrated in a laminated body so that the antenna structure (2) and the circuit structure (5) are arranged between the substrate (1) and the at least one further substrate (1), and a form-fit connection of the material involved in the lamination is formed through the at least one pass-through opening (7).

13. Security document comprising a semi-finished good according to any one of claims 9 to 12.

14. Use of a semi-finished good (21) with the features of any one of claims 9 to 12 as a component for production of a security document (20).

15. Device (30) for producing a semi-finished good (21) out of at least one substrate (1), a circuit structure (5) with at least one chip contact region (6), and an antenna structure (2) with an antenna contact region (4),
wherein the device comprises:
- an actuator,
- a counter-structure (32),
- a control unit (36) and
- a drive unit (35) which is controlled via the control unit (36) and via which the actuator and the counter-structure (32) can be moved towards each other and away from each other,
- and a provision device (31) for providing and/or advancing the substrate (1), the circuit structure (5) and the antenna structure (2), so that the antenna structure (2) and the circuit structure (5) are applied to the substrate (1) such that the at least one antenna contact region (4) and the at least one chip contact region (6) are adjacent to each other and overlap at least partially superficially in an overlapping region (8),
**characterised in that** the actuator and the counter-structure (32) can be moved towards each other so that at least one pass-through opening (7) is formed in the overlapping region (4) and penetrates the at least one antenna contact region (4) and the at least one chip contact region (6).

## Revendications

1. Procédé servant à fabriquer un demi-produit (21), comprenant les étapes suivantes consistant à :
mettre à disposition un substrat (1) ;
mettre à disposition une structure de commutation (5) comprenant au moins une zone de contact de puce (6) ;
appliquer sur le substrat (1), une structure d'antenne (2) comprenant une zone de contact d'antenne (4) et la structure de commutation (5) de sorte que la zone de contact d'antenne (4) au moins au nombre de une et la zone de contact de puce (6) au moins au nombre de une sont contiguës l'une par rapport à l'autre et se chevauchent au moins en partie à plat dans une zone de chevauchement (8) ; et
établir un contact électrique entre la zone de contact d'antenne (4) au moins au nombre de une et la zone de contact de puce (6) au moins au nombre de une dans la zone de chevauchement (8),
**caractérisé en ce**
**qu'**au moins un orifice de passage (7) est réalisé dans la zone de chevauchement (8), lequel traverse la zone de contact d'antenne (4) au moins au nombre de une et la zone de contact de puce (6) au moins au nombre de une.

2. Procédé selon la revendication 1, **caractérisé en ce que** l'orifice de passage au moins au nombre de un est réalisé de telle manière que l'orifice de passage (7) au moins au nombre de un traverse en plus également le substrat (1).

3. Procédé selon l'une quelconque des revendications précédentes, **caractérisé en ce que** des ultrasons sont injectés lors de l'établissement du contact électrique de telle manière qu'il en résulte, entre la zone de contact d'antenne (4) au moins au nombre de une et la zone de contact de puce (6) au moins au nombre de une, un assemblage réalisé thermiquement, en particulier un assemblage soudé par friction.

4. Procédé selon l'une quelconque des revendications précédentes, **caractérisé en ce que** le substrat (1) comprenant la structure d'antenne (2) et la structure de commutation (5) est disposé, lors de l'établissement du contact, entre une sonotrode (33) et une structure complémentaire (32), ladite sonotrode (33) et ladite structure complémentaire (32) étant déplacées l'une en direction de l'autre si bien que la zone de contact d'antenne (4) au moins au nombre de une et la zone de contact de puce (6) au moins au nombre de une ainsi que le substrat (1) sont fixés dans la zone de chevauchement (8) du fait d'une première pression de contact exercée par la sonotrode (33) et la structure complémentaire (32) et qu'au moins la pointe (37) de la sonotrode (33) et/ou au moins une pointe (37) de la structure complémentaire (32) forment, dans la zone de chevauchement (8), l'orifice de passage (7) au moins au nombre de un.

5. Procédé selon l'une quelconque des revendications précédentes, **caractérisé en ce que** la structure d'antenne (2) est imprimée sur le substrat (1) au moyen d'une préparation conductrice.

6. Procédé selon l'une quelconque des revendications précédentes, **caractérisé en ce que** l'orifice de passage (7) au moins au nombre de un est réalisé avant l'établissement du contact électrique.

7. Procédé selon l'une quelconque des revendications précédentes, **caractérisé en ce que** le substrat (1) est empilé dans un empilement de couches de substrat après avoir réalisé le contact électrique avec au moins un autre substrat (1) si bien que la structure d'antenne (2) et la structure de commutation (5) sont disposées entre le substrat (1) et l'autre substrat au moins au nombre de un et que l'empilement de couches de substrat est relié pour former un corps laminé en appliquant une pression et par réchauffement si bien qu'est créé lors de l'assemblage par laminage à travers l'orifice de passage (7) au moins au nombre de un, un assemblage par complémentarité de forme du matériau participant au feuilletage.

8. Procédé de fabrication d'un document de sécurité (20) comprenant la fabrication d'un demi-produit (21) selon l'une quelconque des revendications 1 à 7.

9. Demi-produit (21) comprenant
au moins un substrat (1),
une structure de commutation (5) comprenant au moins une zone de contact de puce (6),
une structure d'antenne (2) comprenant au moins une zone de contact d'antenne (4), sachant que la structure d'antenne (2) et la structure de commutation (5) sont appliquées sur le substrat (1) de telle manière que la zone de contact d'antenne (4) au moins au nombre de une et la zone de contact de puce (6) au moins au nombre de une sont contiguës l'une par rapport à l'autre et se chevauchent au moins en partie à plat dans une zone de chevauchement (8) et qu'un contact électrique entre la zone de contact d'antenne (4) au moins au nombre de une et la zone de contact de puce (6) au moins au nombre de une est réalisé dans la zone de chevauchement (8),
**caractérisé en ce**
**qu'**au moins un orifice de passage (7) est réalisé dans la zone de chevauchement (8), lequel traverse la zone de contact d'antenne (4) au moins au nombre de une et la zone de contact de puce (6) au moins au nombre de une.

10. Demi-produit (21) selon la revendication 9, **caractérisé en ce que** l'orifice de passage (7) au moins au nombre de un traverse en plus également le substrat (1).

11. Demi-produit (21) selon la revendication 9 ou 10, **caractérisé en ce que** le contact électrique est réalisé au moyen d'ultrasons injectés par voie thermique, en particulier sous la forme d'un assemblage soudé par friction.

12. Demi-produit (21) selon l'une quelconque des revendications 9 à 11, **caractérisé en ce que** le substrat (1) comprenant au moins un autre substrat (1) est intégré dans un corps laminé si bien que la structure d'antenne (2) et la structure de commutation (5) sont disposées entre le substrat (1) et l'autre substrat (1) au moins au nombre de un et qu'un assemblage par complémentarité de forme du matériau participant au feuilletage est formé à travers l'orifice de passage (7) au moins au nombre de un.

13. Document de sécurité comprenant un demi-produit selon l'une quelconque des revendications 9 à 12.

14. Utilisation d'un demi-produit (21) présentant les caractéristiques d'une des revendications 9 à 12 en tant que composant aux fins de la fabrication d'un document de sécurité (20).

15. Dispositif (30) servant à fabriquer un demi-produit (21) constitué au moins :
d'un substrat (1) ;
d'une structure de commutation (5) comprenant au moins une zone de contact de puce (6) et une structure d'antenne (2) dotée d'une zone de contact d'antenne (4), sachant que le dispositif comprend :
un actionneur,
une structure complémentaire (32),
une unité de commande (36) ainsi
qu'une unité d'entraînement (35), commandée par l'intermédiaire de l'unité de commande (36), laquelle unité d'entraînement permet de rapprocher l'actionneur et la structure complémentaire (32) l'un de l'autre et de les éloigner,
et un système de mise à disposition (31) servant à mettre à disposition et/ou à amener le substrat (1)
à la structure de commutation (5) et à la structure d'antenne (2),
si bien que la structure d'antenne (2) et la structure de commutation (5) sont appliquées sur le substrat (1) de telle manière que la zone de contact d'antenne (4) au moins au nombre de une et la zone de contact de puce (6) au moins au nombre de une sont contiguës l'une par rapport à l'autre et se chevauchent au moins en partie à plat dans une zone de chevauchement (8),
**caractérisé en ce**
**que** l'actionneur et la structure complémentaire (32) peuvent être rapprochés l'un de l'autre de telle manière qu'au moins un orifice de passage (7) est réalisé dans la zone de chevauchement (8), ledit orifice de passage traversant la zone de contact d'antenne (4) au moins au nombre de une et la zone de contact de puce (6) au moins au nombre de une.
